# EUROPEAN PATENT SPECIFICATION

(11) **EP 3 852 045 B1**
(45) Date of publication and mention of the grant of the patent: **10.12.2025**
(21) Application number: 21152326.1
(22) Date of filing: 19.01.2021
(51) Int. Cl.: G06Q 30/0601, G06Q 30/0282

(54) **A PLATFORM FOR GENERATING AND MANAGING THE SHOPPING INFORMATION FROM CROWD SOURCING**
PLATTFORM ZUR ERZEUGUNG UND VERWALTUNG VON EINKAUFSINFORMATIONEN VON CROWD-SOURCING
PLATEFORME DE GÉNÉRATION ET DE GESTION D'INFORMATIONS D'ACHAT PAR EXTERNALISATION OUVERTE

(30) Priority: 20.01.2020 CN 202010066863
(43) Date of publication of application: 21.07.2021
(73) Proprietor: KeKeQiHuo (Shenzhen) Technologies Co., Ltd., Shenzhen, Guangdong (CN)
(72) Inventor: ZU, Keke, 16955 Solna (SE)
(74) Representative: Proi World Intellectual Property GmbH

(56) References cited:
- US-A1- 2014 019 281
- US-A1- 2017 161 798
- US-A1- 2017 337 287

## Description

### Field of the Invention/Keywords

The invention relates to the technical field of Internet information, in particular to a merchandise information management platform based on crowd sourcing.

### Background of Invention

The conventional way to obtain the product information is carried out by merchants and/or between merchants. The product information displayed on the existing e-commerce platforms, such as Amazon [2], eBay [3], T-Mall [4], JD [5], etc., is either provided by their own platform or from manufacturers, and thus their sources of product information are too narrow.

US 2017/161798 A1 discloses a computer-based system that combines subjective and objective evaluations of a specified product/service for use as a comprehensive assessment of the product/service. The subjective evaluation is made by polling the opinions of a selected plethora of competent commentators. These opinions are then tempered by personal profiles of the respective commentators to create subjectively informed comments. On the other hand, the objective valuation is based on available physical data that is pertinent to the product/service. When evaluated together, the subjective and objective evaluations combine to create weighted comments that can be presented in a suitable manner for public and personal review.

US 2017/337287 A1 describes a computer-implemented reconfigurable crowdsourcing requester-responder system and knowledge platform to respond to requests or crowd-sourced challenges. The system has a processor, a storage element coupled to the processor, and encoded instructions. The system receives a request from a task requestor, tags the request into at least one of a category, group, sort, class, and, or sub-class and applies query-forwarding rule to forward the tagged request to at least one topic channel. The tagged request is expert-sourced to at least one responder meeting the required credentials for a given request. Further, the system tracks usage of requesters and responders by at least one of the following identifier tags: geographic-location data, timestamp data, topic tagging, and user profile; publish responder's entry for at least one of commenting, rating, and, or voting or maintaining anonymity of responder, as designated. The usage causes an operational state change of at least one of the query, the query-forwarding rule, credentials, and, or a project requisite.

US 2014/019281 A1 discloses a system of a shopping portal. A shopping portal application resides and executes on a smart phone or tablet. The shopping portal partitions the display of the electronic device into separately searchable. Within each area, the shopping portal displays product items that relate to a composite product. The shopping portal may access data regarding the related product items, partition the display into a plurality of separately searchable areas, display first related product items into a first separately searchable area, display second related product items into a second separately searchable area, and search first and second related product items and bring them into proximal view for the user to buy products.

### The Content of Invention

The motivation of this invention is to provide a crowd sourcing based platform to generate and manage the merchandise information, and thus solve the problems and deficiencies in the prior art.

To meet the above objectives, the present invention provides a merchandise information generation and management platform based on crowd sourcing participation, wherein the platform comprises merchandise information that is actively published, submitted, and shared by a crowd sourcing user and/or is actively obtained by the platform, wherein the merchandise information includes the following information of the merchandise: attribute information, purchasing source information, copywriting information, tag information and combinations thereof, which are used to display and present a product and/or service;
wherein the platform further comprises a crowd sourcing based two-way review mechanism for reviewing and selecting the merchandise information provided by the crowd sourcing user to ensure that the merchandise information presented on the platform is reliable, true, and effective;
wherein the platform further comprises a crowd sourcing based tagging mechanism for a crowd sourcing user to use a user tag and/or classify the product and/or service, which is a description and/or generalization of properties,
   characteristics, and uses of the product and/or service concerning the crowd sourcing user;
wherein the platform further comprises a platform-tag generation mechanism to generate, from user tags and/or classifications provided by the crowd sourcing user for the product and/or service, a platform tag to be used on the platform;
wherein the platform further comprises a grouping mechanism to group merchandise information for the product and/or service according to the language used;
wherein the platform further comprises a display mechanism to display the merchandise information to potential buyers, and the source of the displayed merchandise information is the merchandise information generated by the crowd sourcing based two-way review mechanism;
wherein the platform allows a crowd sourcing user to make online purchase and promotion of the product and/or service presented by the merchandise information; and
wherein the platform further comprises a reporting and rewarding mechanism.

Further embodiments of and/or improvements to the crowd sourcing based merchandise information generation and management platform mentioned above include the following:
The attribute information includes information and parameters about the product and/or service itself, the purchasing source is the information including where the product and/or service can be purchased, and the copywriting information includes direct or indirect experience, viewpoint and introduction to the product and/or service, the tag information is a description and/or summary of property, characteristic, and use of the product and/or service.

The crowd sourcing based two-way review mechanism is adapted to perform as follows:
a. Receive the merchandise information by collecting the merchandise information created and/or submitted by a crowd sourcing user;
b. Classify the merchandise information and distinguish it according to category of the merchandise information;
c. Establish a review task by listing the newly received merchandise information that needs to be reviewed in the form of a task list, so that a crowd sourcing user can select and review each listed merchandise information;
d. Implement the two-way review wherein the newly obtained merchandise information from a crowd sourcing user is reviewed by the platform, wherein the review task of the platform is performed by the crowd sourcing user, by operation team of the platform, by non-manual algorithms and/or mechanisms, or a combination of the three, wherein review rules are given by the platform or customized by the reviewer, wherein the reviewer gives the review results and/or opinions according to the review rules, wherein the review results can be simplified to pass or fail, the platform summarizes the review results and/or opinions, and determines whether or not a merchandise information from a crowd sourcing user should be passed by checking the decision conditions, so as to select the merchandise information, and on the other hand, the platform feeds back the review results and/or opinions to the submitter, and they can initiate a complaint regarding the review results and/or opinions;
e. Carry out arbitration by conducting the arbitration after receiving the complaint and by making reward and punishment arrangements for both parties based on an arbitration result;
f. Perform reviewing judgment by monitoring whether or not the decision conditions for review are met.

The crowd sourcing based merchandise information generation and management platform is further adapted to generate the merchandise information comprising the attribute information, the purchasing source information, the copywriting information, the tag information, and any combination thereof selected by the crowd sourcing based two-way review mechanism.

The crowd sourcing based merchandise information generation and management platform is further adapted to derive the platform tag, to be used on the platform, from the user tag, wherein the user tag is reviewed by the crowd sourcing based tag review mechanism to generate the platform tag; wherein the user tag is any of the following: a category tag, a feature tag, and a custom tag.

The category tag can be divided in a level-by-level way, the feature tag is to mark the characteristics and/or features of the product and/or service, and the custom tag is a user-defined tag in addition to the category and feature tags the custom tag for allowing a crowd sourcing user to make tags from the user's own understanding, feeling and/or preference.

The crowd sourcing based merchandise information generation and management platform is further adapted to generate the platform tag as follows:
1) Determine whether or not a platform tag associated with the received user tag has been created the first time; and if so, determine whether or not the received user tag comprises the category tag; while if not, prompt the user to provide the category tag and return to receiving the user tag information;
2) Cause the user tag to take effect after the user tag is screened through the crowd sourcing based two-way review mechanism and become the platform tag, apply the category tag from an effective user tag or the platform tag as a category template to be used by the platform; wherein when a user adds a new merchandise information such as a new purchasing source, the platform automatically marks the category of the newly added merchandise information with the existing and effective category template;
3) Perform platform intervention by presetting intervention thresholds to intervene in the validity determination of a user tag and to intervene using an integration method, a clustering method, or a combination of these two.

The crowd sourcing based merchandise information generation and management platform is further adapted to refrain from correlating the merchandise information described in different languages but make cross-language correlations to the category information.

The crowd sourcing based merchandise information generation and management platform is further adapted to refrain from fixing what necessary attribute sub-items that the attribute information should comprise, wherein the attribute information is customized by the crowd sourcing user, the purchasing source information can include multiple addresses, and the crowd sourcing user can customize the expression form of the purchasing address; wherein the copywriting information comes from the crowd sourcing user, and the crowd sourcing user can actively submit the copywriting information to the platform, the platform can also obtain the copywriting from other sources.

The crowd sourcing based merchandise information generation and management platform is further adapted to generate the attribute information as follows:
1) The attribute information is customized by the crowd sourcing user; the platform refrains from presetting which sub-items the attribute information should include;
2) The crowd sourcing based two-way review mechanism is used to review the attribute information provided from the crowd sourcing user; wherein the reviewer is any one of the crowd sourcing user, the operation team of the platform, non-manual algorithms and/or mechanisms, or a combination of the three; the decision conditions for review results can be provided by the platform designer or customized by the reviewer; the merchandise information submitter can review and/or complain regarding the review results and/or opinions;
3) Platform arbitration, once a complaint is triggered, the platform intervenes in arbitration;
4) Modification and resubmission wherein if an attribute information fails after the reviewing process, the submitter can modify it based on the review results and/or opinions;
5) Validity judgment, wherein the validity judgment for an attribute information is based on the review results and/or opinions obtained from the platform review;
6) Templated attribute information wherein if the attribute information passes the crowd sourcing based two-way review, this user-defined attribute information is applied as the template for this product and/or service in the platform.

The crowd sourcing based merchandise information generation and management platform is further adapted to monitor at least one of a GPS, a municipal address, a civic address, and an **IP** address that is required to be included in the merchandise information provided by the crowd sourcing user.

The crowd sourcing based merchandise information generation and management platform is further adapted to set up qualification conditions to select the reviewer; wherein the qualification conditions include the following: to be qualified for reviewing a merchandise information, the reviewer can be a user who has created similar product information, a local user in the same city as the purchasing source indicated, a user who has created the merchandise information and/or copywriting for this product and/or service, or a user who has added purchase sources for products in the same category.

Further, the crowd sourcing based merchandise information generation and management platform may comprise review rules for a copywriting information from a crowd sourcing user, wherein the review rules comprise scoring items defined by the platform and/or review opinions.

The crowd sourcing based merchandise information generation and management platform is further adapted to select the copywriting information used by the platform by adopting a periodic scoring mode, and select and update the copywriting for display according to an effective score obtained in each scoring period.

The crowd sourcing based merchandise information generation and management platform is further adapted to display the merchandise information based on different displaying modes including region-based, user subscription, user data based, or any combination thereof.

The crowd sourcing based merchandise information generation and management platform is further adapted to filter and display the merchandise information based on the region, and to display the attributes of a product/and or service that can be purchased in the designated displaying area, that is, the platform is adapted to merge the recurring attribute information and display all available attribute information in the designated displaying area; wherein selection of the copywriting information for displaying is only linked to the product and/or service and not needed to be from the designated displaying area.

The crowd sourcing based merchandise information generation and management platform is further adapted to allow a user to purchase and promote the products and/or services displayed on the platform according to the merchandise information and to further perform follow-up operations including: placing an order, ordering, entrusting or delegating purchase, recommendation, sharing, and forwarding.

The crowd sourcing based merchandise information generation and management platform is further adapted to award a user with items including: submitting product information, performing a platform task, generating transaction volume from the provided merchandise information, and bringing subscriptions as a merchandise information provider; and using reward forms including points, bonuses, platform permissions, and commission from platform transaction.

Further, the crowd sourcing based two-way review mechanism of the crowd sourcing based merchandise information generation and management platform may be simplified as a one-way review mechanism; and wherein the platform is adapted to refrain from providing feedback review opinions to the submitter, to skip the platform arbitration process, and to enter the judgment process; or instead of the submitter, the platform is adapted to review the review opinions from the reviewer, and if a review error is found, the platform enter the arbitration process.

The embodiment of this invention provides a merchandise information generation and management platform based on the crowd sourcing participation, wherein the said platform comprises the comprehensive merchandise information which is actively published, submitted, and shared by a crowd sourcing user or/and the comprehensive merchandise information is actively obtained by the said platform, the comprehensive merchandise information includes: attribute information, purchasing source information, copywriting information, tag information and combinations thereof, which are used to display and present a product and/or service;
said platform further comprises a crowd sourcing based two-way review mechanism to review and select the comprehensive merchandise information provided by the crowd sourcing user, so as to ensure that reliable, true and effective comprehensive merchandise information is presented on the said platform;
the platform further comprises a crowd sourcing based tagging mechanism, which refers to a mechanism for a crowd sourcing user to tag and/or classify a product and/or service, which is a description and/or generalization of the properties, characteristics, and uses of a product and/or service by the crowd sourcing user;
the platform further comprises the generation of a platform tag to be used on the said platform from user tags and/or labels provided by a crowd sourcing user for a product and/or service;
the platform further comprises grouping the comprehensive merchandise information for a product and/or service according to the language in which it is used; the platform further comprises a display of the comprehensive merchandise information, which refers to the merchandise information displayed by the platform to potential buyers, and the source of the displayed merchandise information is the comprehensive merchandise information generated by the crowd sourcing based two-way review mechanism;
the platform allows a crowd sourcing users to make online purchase and promotion of a product and/or service displayed by the comprehensive merchandise information; and
the platform further comprises a reporting and rewarding mechanism.

Further, the attribute information is information and parameters about a product and/or service itself, the purchasing source is the information containing where the product and/or service can be purchased, and the copywriting information contains the direct or indirect experience, viewpoint and introduction of the product and/or service, the tag information is a description and/or summary of the property, characteristic, and the use of the product and/or service.

Further, the specific steps of the crowd sourcing based two-way review mechanism are as follows:
a. Receive the merchandise information, the platform collects the merchandise information created and/or submitted by a crowd sourcing user;
b. Classify the merchandise information, the platform classifies and distinguishes according to the category of a merchandise information;
c. Establish a review task, the newly obtained merchandise information that needs to be reviewed is listed in the form of a task list, and a crowd sourcing user can participate in the platform task to select and review each listed merchandise information;
d. Implement the two-way review, the newly obtained merchandise information from a crowd sourcing user needs to be reviewed by the platform. The review task of the platform is performed by the crowd sourcing user, by the operation team of the platform, by non-manual algorithms and/or mechanisms, or a combination of the three. The review rules are given by the platform or customized by the reviewer. The reviewer gives the review results and/or opinions according to the review rules. In the specific implementation, the review results can be simplified to pass or fail, the platform summarizes the review results and/or opinions, and determine whether or not a merchandise information from a crowd sourcing user should be passed by checking the decision conditions, so as to select the merchandise information. On the other hand, the platform feeds back the review results and/or opinions to the submitter, and they can initiate a complaint regarding the review results and/or opinions.
e. Platform arbitration, the platform conducts arbitration after receiving the complaint, and the platform can make reward and punishment arrangements for both parties based on the arbitration result;
f. Perform reviewing judgment, the platform monitors whether or not the decision conditions for review are met.

Further, the platform comprises the generation of merchandise information, that is, the attribute information, the purchasing source information, the copywriting information, the tag information, and any combination of them is generated and selected by the crowd sourcing based two-way review mechanism.

Further, the platform tag which is used on the platform is derived from the tag information generated by the crowd sourcing tagging, that is, the user tag. The user tag includes: a category tag, a feature tag, and a custom tag. The user tag is reviewed by the crowd sourcing based tag review mechanism to generate the platform tag.

Further, the category tag is generally divided in a level-by-level way, the feature tag is the mark of the characteristics and/or features of a product and/or service, and the custom tag is a user-defined tag in addition to the category and feature tags, a crowd sourcing user can make tags from their own understanding, feelings, preferences, etc. Further, the steps for generating the platform tag are as follows:
1) Determine whether or not a platform tag associated with the received user tag has been created for the first time. If so, determine whether or not the received user tag contains the category tag, if not, the platform will prompt the user to provide the category tag, and return to receive the user tag information again;
2) The user tag takes effect after being screened through the crowd sourcing based two-way review mechanism and becomes the platform tag, the category tag of an effective user tag or the platform tag is used as the category template by the platform. When a user adds a new merchandise information such as a new purchasing source, the platform automatically marking the category of the newly added merchandise information with the existing and effective category template.
3) Platform intervention, the platform can preset intervention thresholds to intervene in the validity determination of a user tag, and the platform intervenes through an integration method, a clustering method, or a combination of these two.

Further, the platform does not correlate the merchandise information described in different languages, but the platform makes cross-language correlations to the category information.

Further, the platform does not fix what necessary attribute sub-items that the attribute information should contain. The crowd sourcing user customizes the attribute information. The purchasing source information can contain multiple addresses, and the crowd sourcing user can customize the expression form of the purchasing address. The copywriting information comes from the crowd sourcing user, and the crowd sourcing user can actively submit the copywriting information to the platform, the platform can also obtain the copywriting from other sources.

Further, the steps for generating the attribute information are as follows:
1) The attribute information is customized by the crowd sourcing user, the platform does not preset which sub-items the attribute information should contain;
2) The crowd sourcing based two-way review mechanism is used to review the attribute information provided from the crowd sourcing user. The reviewer is composed of the crowd sourcing user, the operation team of the platform, non-manual algorithms and/or mechanisms, or a combination of the three. The decision conditions for review results can be provided by the platform designer or customized by the reviewer; the merchandise information submitter can review and/or complain regarding the review results and/or opinions;
3) Platform arbitration, once a complaint is triggered, the platform will intervene in arbitration;
4) Modification and resubmission. If an attribute information module fails after the reviewing process, the submitter can modify it based on the review results and/or opinions;
5) Validity judgment: The validity judgment for an attribute information is based on the review results and/or opinions obtained from the platform reviewing process;
6) Templated attribute information. If the attribute information passes the crowd sourcing based two-way review, this user-defined attribute information is fixed as the template for this product and/or service in the platform.

Further, the platform requires and monitors at least one of a GPS, a municipal address, a civic address, and an IP address should be contained in the merchandise information provided by a crowd sourcing user.

Further, the platform sets up qualification conditions to select the reviewer. To be qualified for reviewing a comprehensive merchandise information, it can be a user who has created similar product information, a local user in the same city as the purchasing source indicated, a user who has created the merchandise information and/or copywriting for this product and/or service, a user who have added purchase sources for products share the same category.

Further, the platform comprises review rules for a copywriting information from a crowd sourcing user, which is, based on the scoring items defined by the platform and/or review opinions from the reviewer.

Further, the selection of the copywriting information used by the platform can adopt a periodic scoring mode, and the copywriting for display is selected and updated according to the effective score obtained in each scoring period.

Further, the displaying manner of the merchandise information includes region-based, user subscription, user data based, or any combination thereof.

Further, the merchandise information is filtered and displayed based on the region, and the attributes of a product and/or service can be purchased in the designated displaying area is jointly displayed, that is, the platform merges the recurring attribute information and displays all the attribute information available in the designated displaying area. The selection of the copywriting information for displaying is only linked to the product and/or service, and it does not need to be from the designated displaying area.

Further, a user can purchase and promote the products and/or services displayed on the platform by the comprehensive merchandise information, the follow-up operations including: placing an order, ordering, entrusting or delegating purchase, recommendation, sharing, and forwarding.

Further, the platform may award a user, the reward items include: submitting product information, performing platform tasks, transaction volume is generated from the provided merchandise information, and bringing subscriptions as a merchandise information provider; the reward forms include: points, bonuses, and platform permissions, commission from platform transaction.

Further, the crowd sourcing based two-way review mechanism can be simplified as a one-way review. The platform does not feedback review opinions to the submitter, skips the platform arbitration process, and enters the judgment process; or the platform infeed of the submitter, to review the review opinions from the reviewer, and if a review error is found, the platform enters the arbitration process.

Compared with the prior art, the beneficial effects of this invention are:
Different from the conventional way of product information obtaining, the merchandise information of this invention is obtained from the crowd sourcing user, i.e. individual users. The merchandise information used by the platform in this invention is provided by the crowd sourcing user, tagged by the crowd sourcing user, and generated by the two-way review mechanisms implemented by the crowd sourcing user; specifically, individuals or organizations can use the contributions of Internet users to obtain needed services or goods.

### Brief Description of the Drawings

In order to more clearly illustrate the embodiments or the technical solutions of this invention, the following will briefly introduce the drawings that need to be used in the description of the embodiments or the technical solutions of this invention. Obviously, the drawings in the following description are some embodiments of this invention, and other figures can be obtained based on these drawings without inventive effort. The dashed line in the drawings represent optional options.
Figure 1 is a schematic diagram of a classification for the comprehensive merchandise information according to an embodiment of this invention;
Figure 2 is a schematic diagram of a classification for the user tag according to an embodiment of this invention;
Figure 3 is a flow chart of a platform tag generation mechanism according to an embodiment of this invention; and

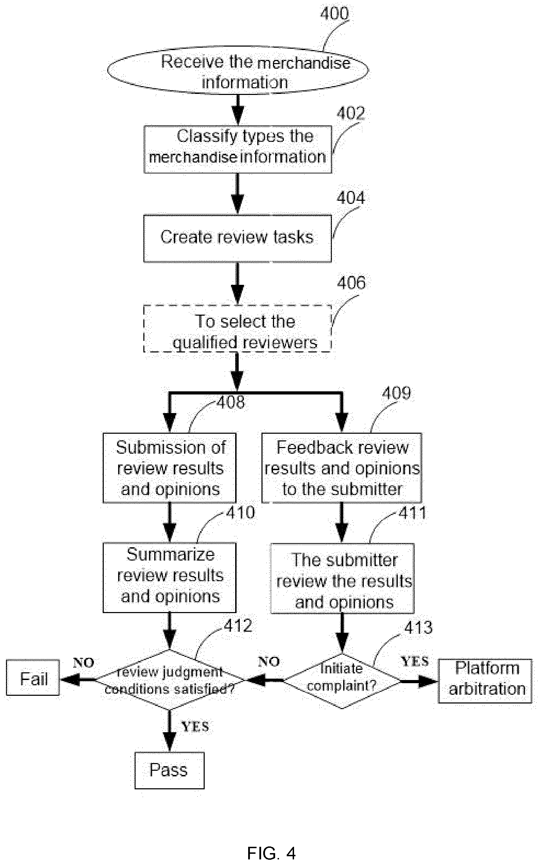

Figure 4 is a flow chart of a crowd sourcing based two-way review mechanism according to an embodiment of this invention.

### Detailed Description of the Invention

In order to make the objects, technical solutions and advantages of the embodiments of this invention more clear, the technical solutions of the embodiments in this invention will be clearly and completely described in connection with the accompanying drawings, and obviously, the described embodiments are part of the embodiments of this invention, not all embodiments. All other embodiments obtained by a person of ordinary skill in the art based on the embodiments of this invention without creative efforts are within the scope of the present invention.

As one embodiment, a merchandise information generation and management platform based on the crowd sourcing user is proposed in this invention. The comprehensive merchandise information 100 of the said platform comes from the crowd sourcing user, and the crowd sourcing user can actively publish, submit or share the comprehensive merchandise information 100 on the said platform; the said platform can also take the initiative to acquire the comprehensive merchandise information 100 of products released by the crowd sourcing user on other platforms (for example: online forums, BBS, user messages on e-commerce platforms, etc.). In other words, the crowd sourcing user can be the user of the said platform, non-users of this platform, or a mixture of the two. After the said platform obtains the comprehensive merchandise information 100, it is screened, verified, organized, managed, and finally presented on the said platform. Differentiated from the conventional way of product information obtaining, the merchandise information of this invention is obtained from the crowd sourcing user, i.e. individual users. The merchandise information used by the platform in this invention is provided by the crowd sourcing user, tagged by the crowd sourcing user, and generated by the two-way review mechanisms implemented by the crowd sourcing user; specifically, individuals or organizations can use the contributions of Internet users to obtain needed services or goods.

The comprehensive merchandise information 100 from the crowd sourcing user should contain four types of information: an attribute information 102, a purchasing source 104, a copywriting information 106, and a tag information 108, which are combined to display and present a product and/or service.

The attribute information 102 is the information and parameters about a product and/or service itself, generally include: photos, videos, virtual reality (VR) videos, product names, product brands, product serial number, product specifications (e.g. color, weight, size, etc.), product prices, ingredients, origin, function, touch, taste, etc. Among them, sensory information such as touch and taste can be descriptive text or digital files. The attribute information of a certain product can be expressed in a collective form like {Name: Shirt; Brand: HM; Serial number: 1234; Color: white, black, blue; Size: XL, X, M, S; Price: 200 SEK; Ingredient: 100% cotton; Origin: Sweden; Digital tactile file: XYZ; Photo file: ABC; Video file: EFG; VR file: HIJ}. Note that the name, brand, serial number, color, size, price, ingredient, origin, tactile file, photo, video, VR and other items are all sub-items of the attribute information.

The purchasing source 104 is the information that contains where a product and/or service can be purchased. The expression form of the purchasing source information can be but not limited to: GPS coordinates, a civic address, a postal address, an indoor address, a network address, an IP Address, carriers of address information such as a picture, video, QR code, etc.

The copywriting information 106 includes direct or indirect experience, opinions and/or introduction of the product. The copywriting can be an evaluation of product functions and performance, an explanation of product selling points, a brand story, a user experience, promotion, advertising, etc.; the expression of the copywriting can be but not limited to: text, picture, video, audio, symbol, virtual reality, tactile information, etc.

The tag information 108 is the description and/or generalization of the property, characteristic, and the use of a product and/or service. The tag information include, but is not limited to: the category tag, the feature tag, the custom tag, etc.

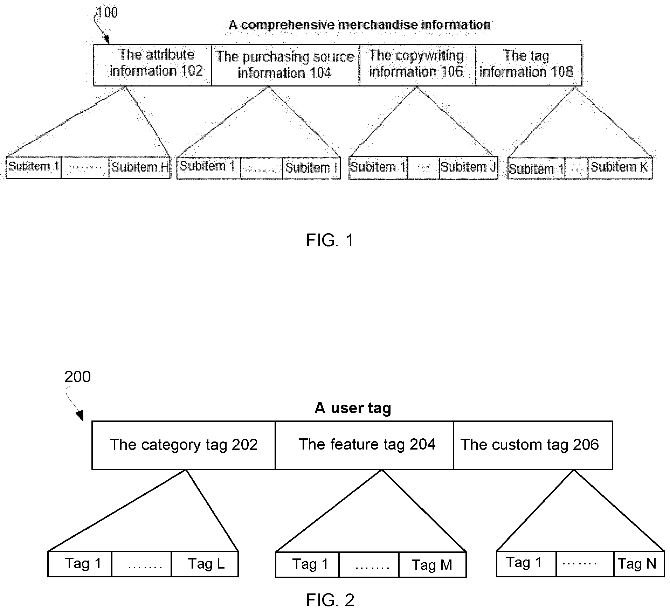

As an example, a comprehensive merchandise information is shown in Figure 1, which including H sub-items of the attribute information, I sub-items of the purchasing source, J sub-items of the copywriting information, and K sub-items of the tag information.

Different from the existing e-commerce practices, the platform does not provide uniform, static, platform-side customized product tags. In this invention, for example, a fixed product category as used by the existing e-commerce platforms.

The proposed crowd sourcing based tagging mechanism refers to the mechanism and method for crowd sourcing users to tag and/or classify a product and/or service; specifically, the crowd sourcing tagging refers to the description and/or generalization of the property, characteristic, and the use of a product and/or service by the crowd sourcing user. In summary, the tag information generated by the crowd sourcing tagging is called the user tag 200, and the content of the user tag may include, but is not limited to: a category tag 202, a feature tag 204, and a custom tag 206.

The category tag 202 is usually differentiated level by level, for example: maternal and infant (the first-level classification) -> milk powder (the second-level classification) -> Baby Semp 1 (the third-level classification or the product name).

The feature tag 204 is a generalization of the features and/or characteristics for a product and/or service. For example, tags for a food can be independent and parallel from each other, and thus a food can be tagged from four parallel features like color, fragrance, taste and shape, rather than the level-by-level hierarchical structure as the category tag 202.

The custom tag 206 is a user-defined tag in addition to the category and feature tags. For example, the best price, the same style of celebrity, home essentials, etc.

As an example, a user tag comprising L sub-items of the category tag, M sub-items of the feature tag, N sub-items of the custom tag is shown in Figure 2.

In this invention, the tag information used on the said platform is generated according to the user tag 200. The generated tag information from the user tag by the said platform is termed as the platform tag of the product and/or service.

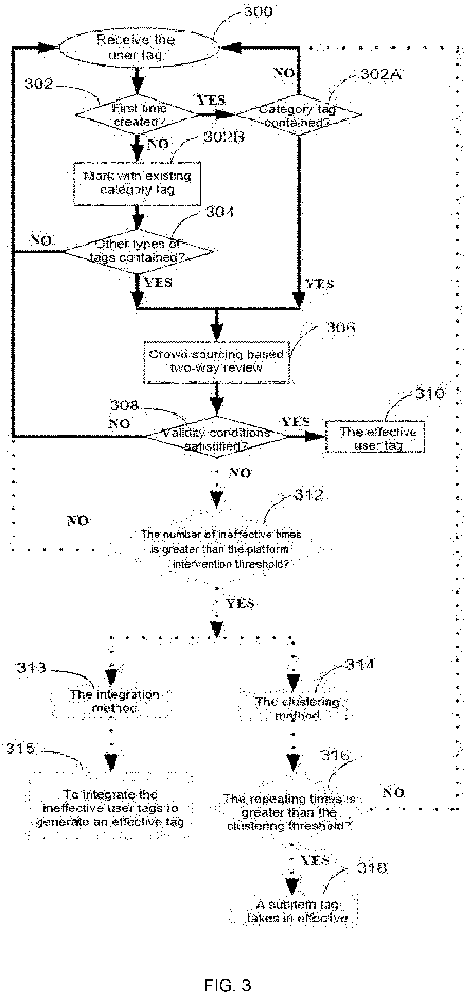

As shown in Figure 3, the user tag 200 can be submitted to the platform as a piece of merchandise information, or can be individually tagged by the crowd sourcing user. When the user tag information is received by the said platform 300, it is determined whether its corresponding platform tag is created for the first time 302, and if yes, the submitted user tag needs to contain the category tag 302A, and if the submitted user tag does not contain the category tag 202, the said platform prompts the user to provide the category tag 202, and returns to receive the user tag information again.

If it is not created for the first time, the platform will mark the submitted user tag by using the existing effective category tag 302B, and then the platform will determine whether the submitted user tag contains other tags except the category tag 304. If yes, the platform enters the crowd sourcing based two-way review mechanism 306, the validity of these tags will be determined 308.

This automatic marking with the existing category tag can not only be applied to the same product and/or service, but also be extended to similar products and/or services. For a similar product and/or service, the said platform recommends the effective similar category tags 202 as a reference for the user when tagging. Take the German Hipp milk powder for example, when its product information is first submitted by a crowd sourcing user, the said platform recommends the category tags that are already in effect of its similar products to the user, such as the existing effective category tag of the Swedish Semper milk powder on the said platform: Maternal and infant (the first-level) -> milk powder (the second-level) -> German Hipp milk powder (the third-level or product name). The crowd sourcing user can refer to the similar category tags recommended by the said platform to facilitate their tagging. After the crowd sourcing user has finished the tagging, the platform still enters the user tag validity judgment process 302 and the crowd sourcing based two-way review 306.

The user tag 200 will take effect after being reviewed and approved by the crowd sourcing based two-way review mechanism 306. The effective user tag or the platform tag will be stored on the said platform as a part of the merchandise information. The effective user tag or the platform tag is at least contains a category tag, the effective category tag is used as the template for marking the same type of product and/or service on the said platform. When a new purchasing source or new merchandise information is added to an existing product and/or service, the said platform will automatically mark the category to which this product belongs according to the category template that has been in effect.

When a user tag is reviewed by the said platform, it can be executed by the crowd sourcing user, by the operation team of the platform, by non-manual algorithms and/or mechanisms such as artificial intelligence, or by a combination of the three. If the reviewing is implemented by the crowd sourcing user, the validity judgement conditions can be simplified to be based on the opinion of the majority. For example, the said platform send to the number of C users for review, if D of them passed and D>(C/2), then the final review result is pass. In specific implementation, the number of C can be nine and D can be five.

If the validation condition 308 is not met, the said platform returns and continues to receive user tags until a user tag is satisfied 310. For example, until a user tag is approved by majority opinions.

Specifically, the platform tag is generated via the tagging and the two-way review mechanism both based on the crowd sourcing user. In the process of generating platform tag, the platform can also participate. The platform participation can be executed by the operation team of the platform, by the non-manual algorithms and/or mechanisms such as artificial intelligence, or a combination of the two. As one embodiment, two participation methods are proposed in this invention, the integration method 313 and the clustering method 314.

The integration method 313 means that the platform refers to the N number of ineffective user tag information (the user tags that did not pass the two-way review mechanism), and determines the effective tag of this product and/or service through methods such as speculation, reasoning, association, modification, adjustment, and supplement; When the integration method 313 is employed, the said platform integrates the ineffective user tags that are not passed to determine the effective platform tags 315. For example, the platform intervention threshold P can be set to three times, and the three ineffective user tags are: lovely cat claw cup, cute cat claw cup, transparent cat claw cup. Then the platform can determine the platform tag of this product as: cat claw cup, according to the integration method 313 such as reasoning.

The clustering method 314 refers to the process in which the platform takes the N ineffective user tags to determine whether the number of repetitions of a sub-item is greater than the clustering threshold. That is, to determine whether there are repetitive tag sub-items among the N user tags. If the number of repeated occurrences of a tag sub-item is R, and greater than the platform preset clustering threshold Q, then the tag sub-item takes effect on the platform. Conversely, if none of the N ineffective user tags has any tag sub-item that meets the requirement that the number of repetitions R is greater than the platform's preset clustering threshold Q, the platform returns and continues to enter a new round of receiving user tags.

After the clustering method based platform intervention returns, if there is still no user tag conforming to the decision condition of the said platform, and the number of failed user tags N is greater than the platform intervention threshold P, the said platform intervenes again with the clustering method to cluster the sub-items of the 2N ineffective user tags so far. This loop is repeated until there is a tag sub-item takes effect.

When the clustering method 314 is employed, the platform intervention threshold P may be set to ten, and the clustering threshold Q may be set to three. The integration method 313 and the clustering method 314 of the platform intervention may be used separately or may be mixed for cross-use.

One method of grouping the merchandise information in this invention is to group according to the used language. For a same product, its merchandise information described in the same language can be linked together; that is, merchandise information described in different languages for the same product is regarded as belonging to different products. For the names of a product described in different languages, the platform do not correlate and map them with each other. For example, the same Nike shoes with the Chinese name " 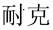 400 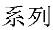 " and the English name "Nike 400 Series" are not associated on the platform and are regarded as different products. Accordingly, the platform manages its merchandise information described in different languages separately.

Although the said platform manages its product described in different languages separately, the said platform makes cross-language associations to the categories of a product and/or service. When a user enters a product category and search in a certain language, the platform presents all the products and brands under the category described in this language. Because the category name described in other languages is associated by the platform, a user can view all the products and brands in this category described in other languages. For example, the platform makes cross-language associations for the category "milk powder". Then, the Chinese name " 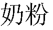 "- the English name "Milk Power"- the German name "Milchpulver", etc. are connected and associated on the said platform. When a user enters the category name "milk powder" in Chinese, the platform presents the milk powder brand and product described in Chinese. And the milk powder brands and products in other languages, such as in English and German can also be viewed by the user.

The platform can also correlate and map the merchandise information described in different languages for a same product and/or service, and treat the merchandise information in various languages as the same product and/or service. Accordingly, the said platform associates all of the comprehensive merchandise information, which belong to a same product and/or service, in a unified manner.

The validation process of a user tag (to generate the platform tag) is applicable to the tag information described in the same language and also applicable to tag information described in different languages. The platform can translate an effective platform tag into different languages, and associate them with the corresponding same product and/or service described in multiple languages. The said platform can also treat the merchandise information described in different languages as different products and/or services, and generate their effective platform tags in the respective language systems.

A conventional review mechanism is a one-way reviewing implemented by the reviewer, and the review result is passively accepted by the reviewee. In order to ensure the merchandise information presented on the platform is reliable and real, the invention provides a crowd sourcing based two-way review mechanism. In this invention, the comprehensive merchandise information is submitted by a crowd sourcing user and reviewed on the platform. The submitter can review the review results and/or opinions, and select whether or not to initiate a complaint.

The specific steps of the crowd sourcing based two-way review mechanism are described as follows:
Step 1: Receive the merchandise information 400, the platform collects merchandise information created and/or provided by a crowd sourcing user.
Step 2: Classify the merchandise information 402, the said platform classifies and differentiates according to the category of a merchandise information; for example, distinguish the attribute information, purchasing source information, copywriting information, tag information, etc. from the received merchandise information.
Step 3: Create a review task 404, the platform lists the merchandise information to be reviewed in the form of a task list. A crowd sourcing user can participate in the task to select and review a merchandise information in the task list. The platform can also select users who meet the review qualifications to participate the review task, for example, users who have posted similar products are eligible to review the merchandise information under the same category.
Step 4: Perform the two-way review. The merchandise information from a crowd sourcing user is reviewed on the platform 408. The reviewer can be a crowd sourcing user, the operation team of the platform, a non-manual algorithm and/or mechanism such as artificial intelligence, or a combination of the three. The platform designer can predefine the review rules, and the platform can also allow the reviewer to customize the review rules. The reviewer can give opinions and/or results according to the review rules, for example, the review result can be passed or not, and the platform summarizes the review results and/or opinions 410. According to the review judgment condition 412, the platform determines whether or not a merchandise information from a crowd sourcing user can be passed, so as to filter and select the merchandise information.

Regardless of the review rules are pre-defined by the platform or customized by the reviewer, a reviewer must give a review opinions. The review opinion is a description that used to explain at least one specific reason for giving the review result and thus to justify it. For example, specific reasons for not passing the review can be: missing a necessary attribute information, including information on violations of laws and regulations, and repeated submission without modification.

On the other hand, the platform can feed back the review results and/or opinions to the submitter 409, the submitter can review the review results and/or opinions 411, and the submitter can also initiate a complaint about the review results and/or opinions 413, e.g. the submitter can point out which review opinions and/or the given scores cannot be justified. As a supplement to the complaint process, the platform also allows the submitter to modify and submit again based on the review opinions. When the platform forwards the modified merchandise information, it can choose to send it to the same reviewer again, and the reviewing cycle repeats until the reviewer agrees to pass.

Step 5: Implement the platform arbitration, the said platform receives the complaint and then arbitrates. According to the arbitration result, the platform can make corresponding reward and punishment arrangement for both parties. If the complaint is effective and valid, the complainant will be rewarded and the respondent will be punished; otherwise, the complainant is punished and the respondent is rewarded. The specific reward and punishment measures are determined by the platform according to the actual operation conditions.

The arbitration committee can be the operation team of the platform, the crowd sourcing user (platform users and/or non-platform users), non-manual algorithms and/or mechanisms (such as artificial intelligence), or a combination of the three.

Step 6: Perform the judgement process for reviewing, the platform monitors whether or not the pass conditions are satisfied. The pass conditions may be determined according to, but not limited to, review scores (e.g., the review score of the merchandise information from a user are higher than the average score), number of reviews and/or the review opinions (e.g., more than half of the reviewers gave pass opinion), etc. If the pass conditions are met, the merchandise information under review is validated at the platform and enters the platform database, otherwise the merchandise information being reviewed will not enter the database for further storage.

It should be noted that, in a specific implementation, the crowd sourcing based two-way review can also be simplified to one-way review. For example, the platform does not feedback the review opinions to the merchandise information provider, the platform arbitration process is skipped, and the reviewing judgement process is entered; or the review opinions are reviewed by the platform rather than by the merchandise information provider, and the platform arbitrates if there is any review errors or problems.

In this invention, the merchandise information from a crowd sourcing user needs to be reviewed by the crowd sourcing based two-way review mechanism before used by the platform. The merchandise information used by the platform includes any combination of attribute information 102, purchasing source 104, copywriting information 106, tag information 108, etc. When a merchandise information is first created on the platform, it must contain the necessary attribute information 102 and at least one purchase source information 104.

The types of a product and/or service vary widely, and their necessary attribute information is also different. For example, for a clothing product, its color, size, and ingredient are the necessary attribute information. However, for a tea products, its origin, variety and taste are the necessary attribute information.

This invention does not fix what necessary attribute information a product should contain. Instead, the specific items of necessary attributes are customized by the crowd sourcing user. That is, the data structure and/or template of the attribute information used by the platform comes from user customization, and is generated and determined via the crowd sourcing based two-way review mechanism.

In one embodiment, the template generation of the attribute information for a product and/or service is as follows:
Step 1: Customize attribute information by the crowd sourcing user. The platform does not preset what sub-items should be included in the attribute information for a product and/or service. The crowd sourcing user defines the sub-items of what necessary attribute information should be contained for this product and/or service.
Step 2: Two-way review mechanism. The attribute information customized by the crowd sourcing user is reviewed on the platform. Again, the reviewer can be the crowd sourcing user, the operation team of the platform, non-manual algorithms and/or mechanisms, or a combination of the three. The review rules can be drawn up by the platform designer or determined by the reviewer. Specifically, the review rules for the attribute information can be: a. Does it contain false information? b. Whether or not the necessary attribute information is completed? c. Is the information expressed accurately and clearly? The review rules can also simply include one item: pass or not? Regardless of how the review rules are determined, the reviewer must give at least one review opinion and point out the specific reasons for the failure to justify the review result. The specific reasons for these failures can be: missing necessary attributes, including information on violations of laws and regulations, and repeat submission without modification, etc.

After the platform obtains the review results and/or opinions, the platform feedback the review opinions to the submitter. The submitter can review and/or complain regarding the review opinions; for example, complains can be: unreasonable rejection or insufficient reasons for rejection.

Step 3: Platform arbitration. Once a complaint is triggered, the platform will intervene in arbitration. If the complaint is effective, the complainant will be rewarded and the complained party will be punished; otherwise, if the complaint is invalid, the complainant will be punished and the complained party will be rewarded.

Step 4: Modification and resubmission. If an attribute information does not passed from the reviewing process, the submitter can modify and update according to the review opinions. The modified attribute information can be forwarded for review again, and the platform can send it to the same reviewer who gave rejection, this cycle can be repeated until the reviewer agrees to pass.

Step 5: Validity determination. The judgment of the validity of the attribute information is based on the review results and/or opinions. Specifically, the conditions for determining the validity of the attribute information can be based on the number of reviewers who approve to pass and/or the passing rate, it can also be the number of reviewers who approve to pass within a certain period of time and/or the passing rate, for example it can be determined as 'to pass', if five passes received from different reviewers within 24 hours, or within 24 hours the passing rate exceeds 80% and at least 10 reviewers participated. The platform may not set the review qualifications, all other crowd sourcing users except the submitter can participate in the review task. Or the platform can limit the review qualifications. The acquisition of the review qualification can be users who have provided similar merchandise information, local users in the same city as the purchasing source indicated, users who have created copywriting of this product, users who have added a purchasing source for this product, etc.

Step 6: Templated attribute information. If an attribute information of a product and/or service passes the crowd sourcing based two-way review, the user-defined attribute information is fixed as the template for this product and/or service in the platform. When other users add new purchasing sources for the product and/or service, it is required to fill the necessary attribute information by following this template; only all the sub-items of the necessary attribute information required by the template are filled, the current operation implemented by a user can be considered as completed by the platform, otherwise the platform will automatically notify the missing items of the necessary attribute information from the template.

Similarly, in the specific implementation, the generation of the attribute information template can be simplified to the one-way review, the platform does not feedback review opinions to the submitter, skips the platform arbitration process, and enters the reviewing judgment process; Or the review opinions are verified by the platform instead of the submitter, and the platform will enter the arbitration process if any review errors and/or problems are found.

There can be multiple purchasing sources for a product and/or service, such as: different districts in a city, different cities in a country, or even stores all over the world. Similar to the generation of the attribute information, a user can customize the forms of purchasing sources. However, the platform requires at least one in terms of the GPS, municipal address, postal address, and IP address, etc. should be provided.

The validity judgment of the purchasing source information is similar to that of the attribute information, it is selected and generated by the crowd sourcing based two-way review mechanism. Only the platform review is passed, it can be saved and used by the platform. The review rules for the purchasing source information can be predefined by the platform or customized by the reviewer. Specifically, the review rules can be the authenticity and validity of the purchasing source information. The authenticity and validity of the purchasing source information can also be judged by the platform instead of by the crowd sourcing user. For example, if at least one transaction record was generated by the purchasing source, the platform can judge the purchasing address is valid; if there is no transaction for a long time, the platform can mark the purchasing address as invalid; in addition, if a valid purchasing address has no transaction for a long time, the platform can remark it as invalid purchasing information. The specific duration used for validity evaluation is determined in practice, such as three consecutive months. Correspondingly, the invalid purchasing address information should be removed from the platform.

The copywriting information of a product and/or service originates from the crowd sourcing user. A crowd sourcing user can register as a platform user to actively submit the copywriting information to the platform; the platform can also obtain the copywriting from other sources. Again, the copywriting information is filtered and generated by the crowd sourcing based two-way review mechanism of the platform. When a copywriting information is submitted, it is not necessary to provide the attribute and/or the purchasing source information jointly. The template for the copywriting information can be customized by users or determined by the platform.

The copywriting template used in the platform must allow users to edit the content such as: text, pictures, videos, audio, symbols, virtual reality, and tactility Information, etc. The platform may first automatically detect whether the copywriting contains illegal information and/or does not meet the requirements of the platform, if there is, it will be invalidated and forbidden on the platform. Further, the valid copywriting information needs to go through the crowd sourcing based two-way review process.

The platform can limit the review qualifications for the copywriting information. For example, to be qualified for reviewing the copywriting information, a user should already submitted a copywriting for this category. That is, other copywriters of the same product or for the same category. The platform can also open up review qualifications, and all other crowd sourcing users can participate the review task.

Specifically, the review standards for the copywriting information can be composed of two parts, the scoring item given by the platform and the reviewer's opinion.

The platform scoring items can be: attractiveness 0-100 points, innovation 0-100 points, true and accuracy 0-100 points, etc. In addition to scoring based on the platform standards, the reviewer should also provide a review opinion with at least the basis of scoring. The review opinion may also be a suggestion for the copywriting information.

The time period set by the platform to count the scores of a copywriting information is defined as the scoring cycle. For example, every seven days, the platform will count and update the scores of the copywriting information. The scoring items that the platform take into account including but not limited to: the total score, the number of participated reviewers, the average score, the variance, the median, etc.

The copywriting submitter can make amendments at any time, such as correcting typos. As an example of implementation, the number of words to be corrected may be limited, e.g. no more than 50 words.

After receiving the review opinions, the copywriting submitter can choose to update in the next scoring cycle. When the content is updated, the copywriting submitter can choose whether or not to clear the historical cumulative scores. If the choice is to clear the historical cumulative scores, all qualified reviewers can participate in the new round of reviewing. If the choice is not, the reviewers who have already scored cannot score twice, only those who have not scored can participate. The historical scores and the scores obtained in this round are summed, and the final average score is obtained by dividing the total scores with the number of participated reviewers.

Similarly, the copywriting submitter can complain after receiving the review opinions. For example, they can complain that the review opinions are unreasonable and cannot justify the review results. Once the complaint is triggered, the platform will intervene in arbitration. If the complaint is valid, the complainant will be rewarded and the respondent will be punished; otherwise, the complainant will be punished and the respondent will be rewarded.

The composition of the arbitration committee can be the operation team of the platform, the crowd sourcing user, non-manual algorithms and/or mechanisms such as artificial intelligence, or a combination of the three.

Similarly, in the specific implementation, the selection of the copywriting information can be simplified as a one-way review mechanism. The platform does not feedback the review opinions to the submitter, skips the platform arbitration process, and enters the review judgment process. Or the platform verify the review opinions instead of the submitter. If there is any review errors, the platform will enter to the arbitration process.

In this invention, the display of the merchandise information refers to present the merchandise information on the platform to the potential buyers, the displaying information is the merchandise information generated by the two-way review mechanism of the platform. Correspondingly, the merchandise information for displaying should contain at least four parts of content: the purchasing source, the attribute information, the copywriting information, the tag information and the like.

The manners of displaying the merchandise information in this invention including but not limited to: based on region, based on user subscription, based on user data, or any combination of these three.

If the merchandise information is filtered and displayed based on region, the selection of displaying area can be: the world, country or region, city, etc. The displaying area is specified by the actual system design and/or the user when browsing on the platform. When a displaying area is determined, the platform will display all the merchandise information that can be purchased in the selected displaying area according to the purchasing source information. If the purchasing source contains a virtual address such as a network address, its displaying area should be all cities of the country or region that the virtual address belongs to. In other words, if a user specify the displaying area as a certain city, the merchandise information with its purchasing IP address belongs to the country that contains the selected city, will be displayed.

For example, if the designated displaying area by a user is City A of the Country B, the platform database has products X, Y, and Z with purchasing sources respectively as Buy_{X} {The store GPS addresses: GPS X1, GPS X2, GPS X3}, Buy_{Y} {The civic addresses: Civic Y1, Civic Y2, Civic Y3}, Buy_{Z}{The IP addresses: IP Z1, IP Z2, IP Z3}. Assume that the physical location of GPS X1 is within the City A, the GPS X2 is within the Country B but not the City A, the physical addresses of GPS X3, Civic Y1, Civic Y2, and the Civic Y3 are all outside the Country B, and only the IP address IP Z1 belongs to the Country B. When the displaying area is specified as the City A, the platform will only display the merchandise information of product X and Z with the filtered purchasing source information respectively as Buy_{X}{The store GPS: GPS X1} and Buy_{Z}{The IP address: IP Z1}.

In a specific implementation, the platform may preset the display area as a country or region by default, the platform can display the merchandise information that can be purchased according to the position of the user when browsing. The user may also customize the preferred displaying area, such as a country or region, a city, etc.

The platform performs joint display of the attribute information available in the specified displaying area, that is, for all the attribute information of a product associated with the displaying area, the platform merges the recurring ones and displays the joint attribute information. That is, the joint attribute information represents the attribute information of a product that can be purchased in a displaying area. For example, a Product XYZ has two purchasing addresses, the place Adr1 and the place Adr2 in a City A. Assume that the available attribute information set of the Product XYZ at the Adr1 and Adr2 is respectively as Set_{Adr1} {Color: R, G; Size: X, M, S} and Set_{Adr2} {Color: R, B; Size: XL, X}. Then the joint attribute information set for the selected displaying area the City A is Set_{A} {Color: R, G, B; Size: XL, X, M, S}. And thus, the joint attribute information Set_{A} is used for displaying the Product XYZ in City A.

If the merchandise information is filtered and displayed based on the user subscription, the platform allows users to inform their interest in the form of subscription. The options that users can subscribe include but are not limited to: categories of products and/or services, tags of products and/or services, platform recommendations, platform user who created a copywriting, platform user who provided a merchandise information, etc. The platform displays and/or pushes the merchandise information according to the user subscription.

If the merchandise information is filtered and displayed based on the user data, the platform will capture, analyze and mine the user data to obtain the user profile. The said user data includes but is not limited to: user registration information, user behavior on the platform, operation trajectory, usage habits, preferences, transaction data on the platform, consumption characteristics on the platform, consumption habits, etc. A user can also actively submit the said user data information to the platform. The platform displays and/or pushes the merchandise information based on the user profile obtained from user data.

The copywriting contains the direct or indirect experience, opinions and/or introduction of a product and/or service. Therefore, the displaying of the copywriting is designed to be linked to the product and/or service, and does not need to be associated with a displaying area. For example, the copywriting of a product and/or service, can be from the designated displaying area, can be from other areas, or it can be from all areas.

Specifically, as one implementation of this invention, all copywriting of a product and/or service has been reviewed and scored by the two-way review mechanism. After a scoring cycle is over, the platform selects the top five copywriting of a product based on the effective average score.

The effective average score refers to the average score obtained by averaging the scores received by at least three reviewers. If the number of reviewers is less than three, the average score is invalid. Regardless of whether each copywriting receives the same number of reviewing, the effective average score is sorted and used for the selection of the copywriting by the platform.

For a selected copywriting, a reminder is sent by the platform to its submitter and/or creator for informing the time limitation of updating, such as the updating should be implemented within twenty-four hours. After the defined updating period passed, whether or not the update is presented, the selected copywriting is used for displaying.

As a reward for the selected copywriting, the platform may calculate its average score B of the current scoring cycle and the cumulative historical average score C, and pick the higher one as the average source to be used in the next new scoring cycle. After the next new scoring cycle, all available copywriting is sorted and selected according to their average score.

For the displayed merchandise information on the platform, a crowd sourcing user can implement follow-up operations such as to purchase, to promote, etc. Generally, these follow-up operations include but are not limited to: placing an order, ordering, entrusting or delegating purchase, recommendation, sharing, forwarding, etc.

The merchandise information used on the platform originates from the crowd sourcing user and is generated via a crowd sourcing based two-way review mechanism. The crowd sourcing user can also participate in the monitoring and reporting tasks on the platform. The rules for monitoring and reporting can be platform pre-defined or users' own judgment. For example, whether or not the merchandise information is false, deceptive, exaggerated, or illegal.

If there is a user report, the platform enters the arbitration process, and the arbitration committee determines whether or not the report is valid. The composition of the arbitration committee can be the platform's own team, the crowd sourcing user, the non-manual algorithms and/or mechanisms such as the artificial intelligence, or it can be a combination of the three.

The platform may reward a user for the implemented operating work, including but is not limited to: submitting merchandise information (such as attribute information, purchasing source information, copywriting information, tag information, etc.), transaction volume generated from the provided merchandise information, brings subscription volume as a merchandise information provider, performing review tasks, monitoring and reporting, performing arbitration tasks, and performing other platform tasks. The form of rewards can be, but not limited to, points, bonuses, platform permissions, commissions, etc.

Finally, it should be noted that the above embodiments are only used to illustrate the technical solutions of this invention and are not limiting thereof. While the invention has been described in detail with reference to the foregoing embodiments, it will be understood by those of ordinary skill in the art that modifications may be made to the technical solutions set forth in the foregoing embodiments, or equivalents thereof may be substituted for some or all of the technical features thereof; however, such modifications or substitutions do not depart from the scope of the various embodiments of the invention.

### References

[1] www.amazon.com
[2] https://www.ebay.com
[3] https://www.tmall.com/
[4] https://www.jd.com/

## Claims

1. A merchandise information generation and management platform based on crowd sourcing participation of crowd sourcing users using computing devices, wherein the platform comprises information that is actively published, submitted, and shared by a crowd sourcing user and/or that information is actively obtained by the platform, wherein the platform is implemented by a merchant system configured to communicate with the computing devices over a communications network and comprising a storage device that stores merchandise information, wherein the merchandise information includes the following information of the merchandise: attribute information (102), purchasing source information (104), copywriting information (106), tag information (108) and combinations thereof, which are used to display and present a product and/or service on a crowd sourcing user's computing device;
wherein the platform further comprises a crowd sourcing based two-way review mechanism for reviewing and selecting the merchandise information provided by the crowd sourcing user to ensure that the merchandise information presented on the platform is reliable, true, and effective;
wherein the platform further comprises a crowd sourcing based tagging mechanism for a crowd sourcing user to use a user tag (200) of merchandise information and/or classify the product and/or service, which is a description and/or generalization of properties, characteristics, and uses of the product and/or service concerning the crowd sourcing user;
wherein the platform further comprises a platform-tag generation mechanism to generate, from user tags (200) and/or classifications provided by the crowd sourcing user for the product and/or service, a platform tag to be used on the said platform, wherein the platform-tag generation mechanism is adapted to generate the platform tag as follows:
1. in response to receiving (300) a user tag (200) of a merchandise information newly added by a crowd sourcing user, determine (302) whether or not a platform tag associated with the received user tag (200) has been created the first time, wherein said determining includes searching the storage device for a stored platform tag associated with the received user tag (200); and if so, determine (302A) whether or not the received user tag (200) comprises a category tag (202);
- while if not, prompt the crowd sourcing user to provide the category tag (202) and return to receiving the user tag (200); wherein prompting the crowd sourcing user includes generating and sending a prompt from the merchant system via the communications network to the crowd sourcing user's computing device to display the prompt, wherein the prompt requests the crowd sourcing user to provide the category tag (202), wherein, upon the crowd sourcing user providing the category tag (202), the crowd sourcing user's computing device transmits the category tag as a user tag of merchandise information to the merchant system, which processes the user tag in step 1,
2. if the category tag (202) is comprised, cause (310) the user tag (200) to take effect after the user tag (200) is screened (306) through the crowd sourcing based two-way review method and to become the platform tag, and applying the category tag (202) from an effective user tag or the platform tag as a category template to be used by the platform, and storing the platform tag in the storage device as part of the merchandise information, wherein the platform tag corresponds to the user tag (200) taking effect after the user tag is screened through the crowd sourcing based two-way review method; wherein when a user adds a new merchandise information such as a new purchasing source, the platform automatically marks the category of the newly added merchandise information with the existing and effective category template; and
3. perform (312) platform intervention by presetting intervention thresholds to intervene in the validity determination of a user tag (200), intervene through an integration method, a clustering method, or a combination of these two;
wherein the platform further comprises shopping grouping mechanism to group information for the product and/or service according to the language in which used;
wherein the platform further comprises a display mechanism to display the merchandise information displayed by the platform to potential buyers, and the source of the displayed merchandise information is the merchandise information generated by the crowd sourcing based two-way review mechanism;
wherein the platform allows a crowd sourcing user to make online purchase and promotion of the product and/or service presented by the merchandise information; and
wherein the platform further comprises a reporting and rewarding mechanism.

2. The crowd sourcing based merchandise information generation and management platform of claim 1, wherein the attribute information (102) includes information and parameters about the product and/or service itself, the purchasing source is the information including where the product and/or service can be purchased, and the copywriting information (106) includes direct or indirect experience, viewpoint and introduction of the product and/or service, the tag information (108) is a description and/or summary of the property, characteristic, and the use of the product and/or service.

3. The crowd sourcing based merchandise information generation and management platform of claim 1, wherein the crowd sourcing based two-way review mechanism is adapted to perform as follows:
a. Receive (400) the merchandise information by collecting the merchandise information created and/or submitted by a crowd sourcing user;
b. Classify (402) the merchandise information and distinguish it according to the category of the merchandise information;
c. Establish (404) a review task by listing the newly received merchandise information that needs to be reviewed in the form of a task list, so that a crowd sourcing user can participate to select and review each listed merchandise information;
d. Implement the two-way review wherein the newly obtained merchandise information from a crowd sourcing user is reviewed by the platform, wherein the review task of the platform is performed by the crowd sourcing user, by the operation team of the platform, by non-manual algorithms and/or mechanisms, or a combination of the three, wherein review rules are given by the platform or customized by the reviewer, wherein the reviewer gives (408) the review results and/or opinions according to the review rules, wherein the review results can be simplified to pass or fail, the platform summarizes (410) the review results and/or opinions, and determines whether or not a merchandise information from a crowd sourcing user should be passed by checking the decision conditions, so as to select the merchandise information, and on the other hand, the platform feeds back the review results and/or opinions to the submitter, and they can initiate (413) a complaint regarding the review results and/or opinions;
e. Carry out arbitration by conducting the arbitration after receiving the complaint and by making reward and punishment arrangements for both parties based on an arbitration result;
f. Perform reviewing judgment by monitoring whether or not the decision conditions for review are met.

4. The crowd sourcing based merchandise information generation and management platform of claim 1, adapted to generate the merchandise information comprising the attribute information (102), the purchasing source information (104), the copywriting information (106), the tag information (108), and any combination thereof by selection by the crowd sourcing based two-way review mechanism.

5. The crowd sourcing based merchandise information generation and management platform of claim 1, adapted to derive the platform tag, to be used on the platform, from the user tag (200), wherein the user tag (200) is reviewed by the crowd sourcing based tag review mechanism to generate the platform tag; wherein the user tag (200) is any of the following: a category tag (202), a feature tag (204), and a custom tag (206).

6. The crowd sourcing based merchandise information generation and management platform of claim 5, wherein the category tag (202) is divided in a level-by-level way, the feature tag (204) is to mark the characteristics and/or features of the product and/or service, and the custom tag (206) is a user-defined tag in addition to the category and feature tags (204), the custom tag (206) for allowing a crowd sourcing user to make tags from the user's own understanding, feeling and preference.

7. The crowd sourcing based merchandise information generation and management platform of claim 4, adapted to refrain from fixing what necessary attribute sub-items that the attribute information (102) should comprise, wherein the attribute information (102) is customized by the crowd sourcing user, the purchasing source information (104) can include multiple addresses, and the crowd sourcing user can customize the expression form of the purchasing address; wherein the copywriting information (106) comes from the crowd sourcing user, and the crowd sourcing user can actively submit the copywriting information (106) to the platform, the platform can also obtain the copywriting from other sources.

8. The crowd sourcing based merchandise information generation and management platform of claim 4 or 7, adapted to generate the attribute information (102) as follows:
1) The attribute information (102) is customized by the crowd sourcing user; the platform refrains from presetting which sub-items the attribute information (102) should include;
2) The crowd sourcing based two-way review mechanism is used to review the attribute information (102) provided from the crowd sourcing user; wherein the reviewer is any one of the crowd sourcing user, the operation team of the platform, non-manual algorithms and/or mechanisms, or a combination of the three; the decision conditions for review results can be provided by the platform designer or customized by the reviewer; the merchandise information submitter can review and/or complain regarding the review results and/or opinions;
3) Platform arbitration, once a complaint is triggered, the platform intervenes in arbitration;
4) Modification and resubmission wherein if an attribute information (102) fails after the reviewing process, the submitter can modify it based on the review results and/or opinions;
5) Validity judgment, wherein the validity judgment for an attribute information (102) is based on the review results and/or opinions obtained from the platform review;
6) Templated attribute information (102) wherein if the attribute information (102) passes the crowd sourcing based two-way review, this user-defined attribute information (102) is applied as the template for this product and/or service in the platform.

9. The crowd sourcing based merchandise information generation and management platform of claim 1, 4 or 7, adapted to monitor at least one of a GPS, a municipal address, a civic address, and an IP address that is required to be included in the merchandise information provided by the crowd sourcing user.

10. The crowd sourcing based merchandise information generation and management platform of claim 1 or 4, adapted to set up qualification conditions to select the reviewer; wherein the qualification conditions include the following: to be qualified for reviewing a merchandise information, the reviewer can be a user who has created similar product information, a local user in the same city as the purchasing source indicated, a user who has created the merchandise information and/or copywriting for this product and/or service, or a user who has added purchase sources for products in the same category.

11. The crowd sourcing based merchandise information generation and management platform of claim 1, 4, or 10, wherein the platform comprises review rules for a copywriting information (106) from a crowd sourcing user, wherein the review rules comprise scoring items defined by the platform and/or review opinions.

12. The crowd sourcing based merchandise information generation and management platform of claim 1, 4, or 11, adapted to select the copywriting information (106) used by the platform by adopting a periodic scoring mode, and select and update the copywriting for display according to an effective score obtained in each scoring period.

13. The crowd sourcing based merchandise information generation and management platform of claim 1, adapted to display the merchandise information based on different displaying modes including region-based, user subscription, user data based, or any combination thereof.

14. The crowd sourcing based merchandise information generation and management platform of claim 13, adapted to filter and display the merchandise information based on the region, and to display the attributes of a product/and or service that can be purchased in the designated displaying area, that is, the platform is adapted to merge the recurring attribute information (102) and display all available attribute information in the designated displaying area; wherein selection of the copywriting information (106) for displaying is only linked to the product and/or service and not needed to be from the designated displaying area.

15. The crowd sourcing based merchandise information generation and management platform of claim 14, adapted to allow a user to purchase and promote the products and/or services displayed on the platform according to the merchandise information and to further perform follow-up operations including: placing an order, ordering, entrusting or delegating purchase, recommendation, sharing, and forwarding.

16. The crowd sourcing based merchandise information generation and management platform of claim 1, adapted to award a user with items including: submitting product information, performing a platform task, generating transaction volume from the provided merchandise information, and bringing subscriptions as a merchandise information provider; and using reward forms including points, bonuses, platform permissions, and commission from platform transaction.

## Patentansprüche

1. Eine Plattform zur Generierung und Verwaltung von Wareninformationen, die auf der Crowdsourcing-Beteiligung von Crowdsourcing-Nutzern unter Verwendung von Computergeräten basiert, wobei die Plattform Informationen umfasst, die von einem Crowdsourcing-Nutzer aktiv veröffentlicht, übermittelt und geteilt werden und/oder die von der Plattform aktiv abgerufen werden, wobei die Plattform durch ein Händlersystem implementiert wird, das für die Kommunikation mit den Computergeräten über ein Kommunikationsnetzwerk konfiguriert ist und ein Speichergerät umfasst, das Wareninformationen speichert, wobei die Wareninformationen die folgenden Informationen über die Waren umfassen: Attributinformationen (102), Informationen zur Bezugsquelle (104), Informationen zum Werbetext (106), Tag-Informationen (108) und Kombinationen davon, die verwendet werden, um ein Produkt und/oder eine Dienstleistung auf dem Computergerät eines Crowdsourcing-Nutzers anzuzeigen und zu präsentieren;
wobei die Plattform ferner einen Crowdsourcing-basierten Zwei-Wege-Überprüfungsmechanismus zum Überprüfen und Auswählen der vom Crowdsourcing-Benutzer bereitgestellten Wareninformationen umfasst, um sicherzustellen, dass die auf der Plattform präsentierten Wareninformationen zuverlässig, wahrheitsgemäß und wirksam sind;
wobei die Plattform ferner einen Crowdsourcing-basierten Tagging-Mechanismus umfasst, mit dem ein Crowdsourcing-Nutzer ein Nutzer-Tag (200) für Wareninformationen verwenden und/oder das Produkt und/oder die Dienstleistung klassifizieren kann, wobei es sich um eine Beschreibung und/oder Verallgemeinerung der Eigenschaften, Merkmale und Verwendungszwecke des Produkts und/oder der Dienstleistung in Bezug auf den Crowdsourcing-Nutzer handelt;
wobei die Plattform ferner einen Plattform-Tag-Generierungsmechanismus umfasst, um aus den vom Crowdsourcing-Nutzer für das Produkt und/oder die Dienstleistung bereitgestellten Nutzer-Tags (200) und/oder Klassifizierungen einen Plattform-Tag zu generieren, der auf der genannten Plattform verwendet werden soll, wobei der Plattform-Tag-Generierungsmechanismus so ausgelegt ist, dass er den Plattform-Tag wie folgt generiert:
1. als Reaktion auf den Empfang (300) eines Benutzer-Tags (200) einer von einem Crowdsourcing-Benutzer neu hinzugefügten Wareninformation wird bestimmt (302), ob ein mit dem empfangenen Benutzer-Tag (200) verbundenes Plattform-Tag zum ersten Mal erstellt wurde, wobei die Bestimmung das Durchsuchen des Speichergeräts nach einem gespeicherten Plattform-Tag umfasst, das mit dem empfangenen Benutzer-Tag (200) verbunden ist; und wenn ja, wird festgestellt (302A), ob das empfangene Benutzer-Tag (200) ein Kategorie-Tag (202) umfasst;
- wenn nicht, den Crowdsourcing-Benutzer auffordern, das Kategorie-Tag (202) anzugeben, und zum Empfangen des Benutzer-Tags (200) zurückkehren; wobei das Auffordern des Crowdsourcing-Benutzers das Erzeugen und Senden einer Aufforderung vom Händlersystem über das Kommunikationsnetzwerk an das Computergerät des Crowdsourcing-Benutzers umfasst, um die Aufforderung anzuzeigen, wobei die Aufforderung den Crowdsourcing-Benutzer auffordert, das Kategorie-Tag (202) anzugeben, wobei, nachdem der Crowdsourcing-Benutzer das Kategorie-Tag (202) übermittelt das Computergerät des Crowdsourcing-Nutzers das Kategorie-Tag als Nutzer-Tag der Wareninformationen an das Händlersystem, das das Nutzer-Tag in Schritt 1 verarbeitet,
2. wenn das Kategorie-Tag (202) enthalten ist, bewirkt (310), dass das Benutzer-Tag (200) nach dem Screening (306) des Benutzer-Tags (200) durch das Crowdsourcing-basierte Zwei-Wege-Überprüfungsverfahren wirksam wird und zum Plattform-Tag wird, und das Kategorie-Tag (202) aus einem wirksamen Benutzer-Tag oder dem Plattform-Tag als Kategorietemplate, das von der Plattform verwendet wird, und speichert das Plattform-Tag in dem Speichergerät als Teil der Wareninformationen, wobei das Plattform-Tag dem Benutzer-Tag (200) entspricht, das nach dem Screening des Benutzer-Tags durch das Crowdsourcing-basierte Zwei-Wege-Überprüfungsverfahren wirksam wird; wobei, wenn ein Benutzer neue Wareninformationen wie eine neue Bezugsquelle hinzufügt, die Plattform automatisch die Kategorie der neu hinzugefügten Wareninformationen mit der bestehenden und wirksamen Kategorievorlage markiert; und
3. Durchführung (312) einer Plattformintervention durch Voreinstellen von Interventionsschwellenwerten, um in die Gültigkeitsbestimmung eines Benutzertags (200) einzugreifen, wobei die Intervention durch ein Integrationsverfahren, ein Clustering-Verfahren oder eine Kombination dieser beiden Verfahren erfolgt;
wobei die Plattform ferner einen Einkaufsgruppierungsmechanismus umfasst, um Informationen für das Produkt und/oder die Dienstleistung entsprechend der verwendeten Sprache zu gruppieren;
wobei die Plattform ferner einen Anzeigemechanismus umfasst, um die von der Plattform angezeigten Wareninformationen potenziellen Käufern anzuzeigen, und die Quelle der angezeigten Wareninformationen die Wareninformationen sind, die durch den Crowdsourcing-basierten Zwei-Wege-Bewertungsmechanismus generiert wurden;
wobei die Plattform es einem Crowdsourcing-Nutzer ermöglicht, Online-Käufe und Werbung für das Produkt und/oder die Dienstleistung zu tätigen, die durch die Wareninformationen präsentiert werden; und
wobei die Plattform ferner einen Berichts- und Belohnungsmechanismus umfasst.

2. Die Crowdsourcing-basierte Plattform zur Generierung und Verwaltung von Wareninformationen nach Anspruch 1, wobei die Attributinformationen (102) Informationen und Parameter über das Produkt und/oder die Dienstleistung selbst umfassen, die Bezugsquelle die Informationen darüber umfasst, wo das Produkt und/oder die Dienstleistung gekauft werden kann, und die Werbetexte (106) direkte oder indirekte Erfahrungen, Standpunkte und Einführungen zum Produkt und/oder zur Dienstleistung umfassen, die Tag-Informationen (108) eine Beschreibung und/oder Zusammenfassung der Eigenschaften, Merkmale und der Verwendung des Produkts und/oder der Dienstleistung sind.

3. Die Crowdsourcing-basierte Plattform zur Generierung und Verwaltung von Produktinformationen gemäß Anspruch 1, wobei der Crowdsourcing-basierte bidirektionale Bewertungsmechanismus so ausgelegt ist, dass er wie folgt funktioniert:
a. Empfangen (400) der Wareninformationen durch Sammeln der von einem Crowdsourcing-Nutzer erstellten und/oder eingereichten Wareninformationen;
b. Klassifizieren (402) der Wareninformationen und Unterscheiden dieser nach der Kategorie der Wareninformationen;
c. Erstellen (404) einer Überprüfungsaufgabe durch Auflisten der neu empfangenen Wareninformationen, die überprüft werden müssen, in Form einer Aufgabenliste, so dass ein Crowdsourcing-Benutzer teilnehmen kann, um jede aufgelistete Wareninformation auszuwählen und zu überprüfen;
d. Durchführen der wechselseitigen Überprüfung, bei der die neu erhaltenen Wareninformationen von einem Crowdsourcing-Nutzer von der Plattform überprüft werden, wobei die Überprüfungsaufgabe der Plattform vom Crowdsourcing-Nutzer, vom Betriebsteam der Plattform, von nicht-manuellen Algorithmen und/oder Mechanismen oder einer Kombination aus allen dreien durchgeführt wird, wobei die Überprüfungsregeln von der Plattform vorgegeben oder vom Prüfer angepasst werden, wobei der Prüfer (408) die Bewertungsergebnisse und/oder Meinungen gemäß den Bewertungsregeln, wobei die Bewertungsergebnisse vereinfacht in "bestanden" oder "nicht bestanden" zusammengefasst werden können, fasst der Plattform en die Bewertungsergebnisse und/oder Meinungen zusammen (410) und bestimmt durch Überprüfung der Entscheidungsbedingungen, ob eine Wareninformation eines Crowdsourcing-Nutzers angenommen werden soll, um die Wareninformation auszuwählen, und andererseits die Plattform die Bewertungsergebnisse und/oder Meinungen an den Einreicher zurückmeldet und dieser eine Beschwerde bezüglich der Bewertungsergebnisse und/oder Meinungen einleiten kann (413);
e. Durchführung eines Schiedsverfahrens, indem nach Eingang der Beschwerde ein Schiedsverfahren durchgeführt wird und auf der Grundlage des Schiedsspruchs Belohnungs- und Strafmaßnahmen für beide Parteien festgelegt werden;
f. Durchführung einer Überprüfung, indem überwacht wird, ob die Entscheidungsbedingungen für die Überprüfung erfüllt sind.

4. Die Crowdsourcing-basierte Plattform zur Generierung und Verwaltung von Produktinformationen gemäß Anspruch 1, die dazu ausgelegt ist, die Produktinformationen zu generieren, die die Attributinformationen (102), die Kaufquelleninformationen (104), die Textinformationen (106), die Tag-Informationen (108) und jede Kombination davon durch Auswahl durch den Crowdsourcing-basierten bidirektionalen Bewertungsmechanismus umfassen.

5. Die Crowdsourcing-basierte Plattform zur Generierung und Verwaltung von Produktinformationen gemäß Anspruch 1, die dazu ausgelegt ist, aus dem Benutzer-Tag (200) das auf der Plattform zu verwendende Plattform-Tag abzuleiten, wobei das Benutzer-Tag (200) durch den Crowdsourcing-basierten Tag-Überprüfungsmechanismus überprüft wird, um das Plattform-Tag zu generieren; wobei das Benutzer-Tag (200) eines der folgenden ist: ein Kategorie-Tag (202), ein Feature-Tag (204) und ein benutzerdefiniertes Tag (206).

6. Die Crowdsourcing-basierte Plattform zur Generierung und Verwaltung von Produktinformationen gemäß Anspruch 5, wobei das Kategorie-Tag (202) stufenweise unterteilt ist, das Merkmals-Tag (204) dazu dient, die Eigenschaften und/oder Merkmale des Produkts und/oder der Dienstleistung zu kennzeichnen, und das benutzerdefinierte Tag (206) ein vom Benutzer definiertes Tag zusätzlich zu den Kategorie- und Merkmals-Tags (204) ist, wobei das benutzerdefinierte Tag (206) es einem Crowdsourcing-Benutzer ermöglicht, Tags nach seinem eigenen Verständnis, Empfinden und seinen Vorlieben zu erstellen.

7. Die Crowdsourcing-basierte Plattform zur Generierung und Verwaltung von Produktinformationen nach Anspruch 4, die so angepasst ist, dass sie nicht festlegt, welche notwendigen Attributunterelemente die Attributinformationen (102) umfassen sollen, wobei die Attributinformationen (102) vom Crowdsourcing-Nutzer angepasst werden, die Kaufquelleninformationen (104) mehrere Adressen umfassen können und der Crowdsourcing-Nutzer die Ausdrucksform der Kaufadresse anpassen kann; wobei die Copywriting-Informationen (106) von dem Crowdsourcing-Benutzer stammen und der Crowdsourcing-Benutzer die Copywriting-Informationen (106) aktiv an die Plattform übermitteln kann, wobei die Plattform das Copywriting auch aus anderen Quellen beziehen kann.

8. Die Crowdsourcing-basierte Plattform zur Generierung und Verwaltung von Produktinformationen gemäß Anspruch 4 oder 7, die dazu ausgelegt ist, die Attributinformationen (102) wie folgt zu generieren:
1) Die Attributinformationen (102) werden vom Crowdsourcing-Nutzer individuell angepasst; die Plattform nimmt keine Voreinstellungen hinsichtlich der Unterelemente vor, die die Attributinformationen (102) enthalten sollen;
2) Der Crowdsourcing-basierte Zwei-Wege-Überprüfungsmechanismus wird verwendet, um die vom Crowdsourcing-Nutzer bereitgestellten Attributinformationen (102) zu überprüfen; wobei der Überprüfer einer der Crowdsourcing-Nutzer, das Betriebsteam der Plattform, nicht-manuelle Algorithmen und/oder Mechanismen oder eine Kombination aus allen dreien sein kann; Die Entscheidungsbedingungen für die Überprüfungsergebnisse können vom Plattformdesigner vorgegeben oder vom Prüfer individuell angepasst werden. Der Einreicher der Wareninformationen kann die Überprüfungsergebnisse und/oder Meinungen überprüfen und/oder beanstanden.
3) Plattform-Schlichtung: Sobald eine Beschwerde ausgelöst wird, greift die Plattform in die Schlichtung ein.
4) Änderung und erneute Einreichung: Wenn eine Attributinformation (102) nach dem Überprüfungsprozess abgelehnt wird, kann der Einreicher sie auf der Grundlage der Überprüfungsergebnisse und/oder Meinungen ändern.
5) Gültigkeitsbeurteilung: Die Gültigkeitsbeurteilung für eine Attributinformation (102) basiert auf den Überprüfungsergebnissen und/oder Meinungen, die aus der Plattformüberprüfung gewonnen wurden.
6) Vorlagen basierte Attributinformationen (102): Wenn die Attributinformationen (102) die Crowdsourcing-basierte Zwei-Wege-Überprüfung bestehen, werden diese benutzerdefinierten Attributinformationen (102) als Vorlage für dieses Produkt und/oder diese Dienstleistung auf der Plattform verwendet.

9. Die Crowdsourcing-basierte Plattform zur Generierung und Verwaltung von Produktinformationen gemäß Anspruch 1, 4 oder 7, die dazu ausgelegt ist, mindestens eines von GPS, einer kommunalen Adresse, einer bürgerlichen Adresse und einer IP-Adresse zu überwachen, die in den vom Crowdsourcing-Benutzer bereitgestellten Produktinformationen enthalten sein müssen.

10. Die Crowdsourcing-basierte Plattform zur Generierung und Verwaltung von Produktinformationen gemäß Anspruch 1 oder 4, die dazu ausgelegt ist, Qualifikationsbedingungen für die Auswahl des Bewerters festzulegen, wobei die Qualifikationsbedingungen Folgendes umfassen: Um für die Bewertung von Wareninformationen qualifiziert zu sein, kann der Bewerter ein Nutzer sein, der ähnliche Produktinformationen erstellt hat, ein lokaler Nutzer in derselben Stadt wie die angegebene Bezugsquelle, ein Nutzer, der die Wareninformationen und/oder Werbetexte für dieses Produkt und/oder diese Dienstleistung erstellt hat, oder ein Nutzer, der Bezugsquellen für Produkte derselben Kategorie hinzugefügt hat.

11. Die Crowdsourcing-basierte Plattform zur Generierung und Verwaltung von Wareninformationen nach Anspruch 1, 4 oder 10, wobei die Plattform Bewertungsregeln für Textinformationen (106) von einem Crowdsourcing-Benutzer umfasst, wobei die Bewertungsregeln von der Plattform definierte Bewertungselemente und/oder Bewertungsmeinungen umfassen.

12. Die Crowdsourcing-basierte Plattform zur Generierung und Verwaltung von Produktinformationen gemäß Anspruch 1, 4 oder 11, die dazu ausgelegt ist, die von der Plattform verwendeten Werbetexte (106) durch Anwendung eines periodischen Bewertungsmodus auszuwählen und die zur Anzeige bestimmten Werbetexte entsprechend einer in jedem Bewertungszeitraum erzielten effektiven Punktzahl auszuwählen und zu aktualisieren.

13. Die Crowdsourcing-basierte Plattform zur Generierung und Verwaltung von Wareninformationen nach Anspruch 1, die dazu ausgelegt ist, die Wareninformationen auf der Grundlage verschiedener Anzeigemodi anzuzeigen, darunter regionenbasierte, benutzerbasierte, benutzerdatenbasierte oder eine beliebige Kombination davon.

14. Die Crowdsourcing-basierte Plattform zur Generierung und Verwaltung von Wareninformationen nach Anspruch 13, die dazu ausgelegt ist, die Wareninformationen basierend auf der Region zu filtern und anzuzeigen und die Attribute eines Produkts und/oder einer Dienstleistung anzuzeigen, die in dem bestimmten Anzeigebereich gekauft werden können, d. h. die Plattform ist dafür ausgelegt, die wiederkehrenden Attributinformationen (102) zusammenzuführen und alle verfügbaren Attributinformationen im festgelegten Anzeigebereich anzuzeigen; wobei die Auswahl der zu zeigenden Werbetexte (106) nur mit dem Produkt und/oder der Dienstleistung verknüpft ist und nicht aus dem festgelegten Anzeigebereich stammen muss.

15. Die Crowdsourcing-basierte Plattform zur Generierung und Verwaltung von Wareninformationen nach Anspruch 14, die so angepasst ist, dass ein Benutzer die auf der Plattform angezeigten Produkte und/oder Dienstleistungen gemäß den Wareninformationen kaufen und bewerben und darüber hinaus Folgeaktionen durchführen kann, darunter: eine Bestellung aufgeben, bestellen, den Kauf beauftragen oder delegieren, empfehlen, teilen und weiterleiten.

16. Die Crowdsourcing-basierte Plattform zur Generierung und Verwaltung von Produktinformationen gemäß Anspruch 1, die so ausgelegt ist, dass sie einem Benutzer Gegenstände zuweist, darunter: Einreichen von Produktinformationen, Ausführen einer Plattformaufgabe, Generieren von Transaktionsvolumen aus den bereitgestellten Produktinformationen und Einbringen von Abonnements als Produktinformationsanbieter; und Verwenden von Belohnungsformen, darunter Punkte, Boni, Plattformberechtigungen und Provisionen aus Plattformtransaktionen.

## Revendications

1. Une plateforme de génération et de gestion d'informations sur les marchandises basée sur la participation collaborative d'utilisateurs collaboratifs utilisant des appareils informatiques, dans laquelle la plateforme comprend des informations qui sont activement publiées, soumises et partagées par un utilisateur collaboratif et/ou qui sont activement obtenues par la plateforme, dans laquelle la plateforme est mise en œuvre par un système marchand configuré pour communiquer avec les appareils informatiques via un réseau de communication et comprenant un dispositif de stockage qui stocke des informations sur les marchandises, dans lequel les informations sur les marchandises comprennent les informations suivantes sur les marchandises : des informations sur les attributs (102), des informations sur la source d'achat (104), des informations sur la rédaction (106), des informations sur les balises (108) et des combinaisons de celles-ci, qui sont utilisées pour afficher et présenter un produit et/ou un service sur le dispositif informatique d'un utilisateur participatif ;
dans lequel la plateforme comprend en outre un mécanisme d'évaluation bidirectionnel basé sur le crowdsourcing pour évaluer et sélectionner les informations sur les marchandises fournies par l'utilisateur du crowdsourcing afin de garantir que les informations sur les marchandises présentées sur la plateforme sont fiables, véridiques et efficaces ;
dans lequel la plateforme comprend en outre un mécanisme de balisage basé sur le crowdsourcing permettant à un utilisateur crowdsourcing d'utiliser une balise utilisateur (200) d'informations sur les marchandises et/ou de classer le produit et/ou le service, qui est une description et/ou une généralisation des propriétés, des caractéristiques et des utilisations du produit et/ou du service concernant l'utilisateur crowdsourcing ;
la plateforme comprenant en outre un mécanisme de génération de balises de plateforme pour générer, à partir des balises utilisateur (200) et/ou des classifications fournies par l'utilisateur participatif pour le produit et/ou le service, une balise de plateforme à utiliser sur ladite plateforme, le mécanisme de génération de balises de plateforme étant adapté pour générer la balise de plateforme comme suit :
1. en réponse à la réception (300) d'une balise utilisateur (200) d'une information sur une marchandise nouvellement ajoutée par un utilisateur de crowdsourcing, déterminer (302) si une balise de plateforme associée à la balise utilisateur reçue (200) a été créée pour la première fois, ladite détermination comprenant la recherche dans le dispositif de stockage d'une balise de plateforme stockée associée à la balise utilisateur reçue (200) d' s ; et si tel est le cas, déterminer (302A) si la balise utilisateur reçue (200) comprend une balise de catégorie (202) ;
- si ce n'est pas le cas, inviter l'utilisateur participatif à fournir la balise de catégorie (202) et revenir à la réception de la balise utilisateur (200) ; dans lequel le fait d'inviter l'utilisateur participatif comprend la génération et l'envoi d'une invite depuis le système marchand via le réseau de communication vers le dispositif informatique de l'utilisateur participatif afin d'afficher l'invite, dans lequel l'invite demande à l'utilisateur participatif de fournir la balise de catégorie (202), dans lequel, lorsque l'utilisateur participatif fournit la balise de catégorie (202), l'appareil informatique de l'utilisateur participatif transmet la balise de catégorie en tant que balise utilisateur d'informations sur les marchandises au système marchand, qui traite la balise utilisateur à l'étape 1,
2. si la balise de catégorie (202) est comprise, faire en sorte (310) que la balise utilisateur (200) prenne effet après que la balise utilisateur (200) a été filtrée (306) par la méthode d'examen bidirectionnel basée sur le crowdsourcing et devienne la balise de plateforme, et appliquer la balise de catégorie (202) à partir d'une balise utilisateur effective ou de la balise de plateforme en tant que modèle de catégorie à utiliser par la plateforme, et stocker la balise de plateforme dans le dispositif de stockage en tant que partie des informations sur les marchandises, dans lequel la balise de plateforme correspond à la balise utilisateur (200) prenant effet après que la balise utilisateur a été filtrée par la méthode d'examen bidirectionnel basée sur le crowdsourcing ; dans lequel, lorsqu'un utilisateur ajoute de nouvelles informations sur les marchandises, telles qu'une nouvelle source d'achat, la plateforme marque automatiquement la catégorie des informations sur les marchandises nouvellement ajoutées avec le modèle de catégorie existant et effectif ; et
3. effectuer (312) une intervention de la plateforme en prédéfinissant des seuils d'intervention pour intervenir dans la détermination de la validité d'une balise utilisateur (200), intervenir par une méthode d'intégration, une méthode de regroupement ou une combinaison de ces deux méthodes ;
dans lequel la plateforme comprend en outre un mécanisme de regroupement d'achats pour regrouper les informations relatives au produit et/ou au service en fonction de la langue dans laquelle elles sont utilisées ;
dans lequel la plateforme comprend en outre un mécanisme d'affichage pour afficher les informations sur les marchandises affichées par la plateforme aux acheteurs potentiels, et la source des informations sur les marchandises affichées est l'information sur les marchandises générée par le mécanisme d'évaluation bidirectionnel basé sur le crowdsourcing ;
dans lequel la plateforme permet à un utilisateur participatif d'effectuer des achats en ligne et de promouvoir le produit et/ou le service présenté par les informations sur les marchandises ; et
dans lequel la plateforme comprend en outre un mécanisme de signalement et de récompense.

2. La plateforme de génération et de gestion d'informations sur les marchandises basée sur le crowdsourcing selon la revendication 1, dans laquelle les informations sur les attributs (102) comprennent des informations et des paramètres sur le produit et/ou le service lui-même, la source d'achat est l'information comprenant l'endroit où le produit et/ou le service peut être acheté, et les informations rédactionnelles (106) comprennent l'expérience directe ou indirecte, le point de vue et la présentation du produit et/ou du service, les informations de balisage (108) sont une description et/ou un résumé des propriétés, des caractéristiques et de l'utilisation du produit et/ou du service.

3. La plateforme de génération et de gestion d'informations sur les marchandises basée sur le crowdsourcing selon la revendication 1, dans laquelle le mécanisme d'évaluation bidirectionnel basé sur le crowdsourcing est adapté pour fonctionner comme suit :
a. Recevoir (400) les informations sur les marchandises en collectant les informations sur les marchandises créées et/ou soumises par un utilisateur participatif;
b. Classer (402) les informations sur les marchandises et les distinguer en fonction de la catégorie des informations sur les marchandises ;
c. Établir (404) une tâche d'évaluation en répertoriant les informations sur les marchandises nouvellement reçues qui doivent être évaluées sous la forme d'une liste de tâches, afin qu'un utilisateur participatif puisse participer à la sélection et à l'évaluation de chaque information sur les marchandises répertoriée ;
d. Mettre en œuvre la révision bidirectionnelle dans laquelle les informations sur les marchandises nouvellement obtenues auprès d'un utilisateur de crowdsourcing sont révisées par la plateforme, dans laquelle la tâche de révision de la plateforme est effectuée par l'utilisateur de crowdsourcing, par l'équipe d'exploitation de la plateforme, par des algorithmes et/ou des mécanismes non manuels, ou une combinaison des trois, dans laquelle les règles de révision sont données par la plateforme ou personnalisées par le réviseur, dans laquelle le réviseur donne (408) les résultats et/ou les avis de l'évaluation conformément aux règles d'évaluation, les résultats de l'évaluation pouvant être simplifiés en « accepté » ou « refusé », l' de la plateforme résume (410) les résultats et/ou les avis de l'évaluation et détermine si les informations sur les produits provenant d'un utilisateur participatif doivent être acceptées ou non en vérifiant les conditions de décision, afin de sélectionner les informations sur les produits, et d'autre part, la plateforme renvoie les résultats et/ou les avis de l'évaluation à l'auteur de la soumission, et celui-ci peut alors introduire (413) une réclamation concernant les résultats et/ou les avis de l'évaluation ;
e. Procéder à l'arbitrage en menant l'arbitrage après avoir reçu la réclamation et en prenant des dispositions en matière de récompense et de sanction pour les deux parties sur la base du résultat de l'arbitrage ;
f. Effectuer un jugement d'examen en vérifiant si les conditions de décision pour l'examen sont remplies.

4. La plateforme de génération et de gestion d'informations sur les marchandises basée sur le crowdsourcing de la revendication 1, adaptée pour générer les informations sur les marchandises comprenant les informations sur les attributs (102), les informations sur la source d'achat (104), les informations sur la rédaction (106), les informations sur les balises (108) et toute combinaison de celles-ci par sélection au moyen du mécanisme d'évaluation bidirectionnel basé sur le crowdsourcing.

5. La plateforme de génération et de gestion d'informations sur les marchandises basée sur le crowdsourcing de la revendication 1, adaptée pour dériver la balise de la plateforme, à utiliser sur la plateforme, à partir de la balise utilisateur (200), dans laquelle la balise utilisateur (200) est examinée par le mécanisme d'examen des balises basé sur le crowdsourcing afin de générer la balise de la plateforme ; dans laquelle la balise utilisateur (200) est l'une des suivantes : une balise de catégorie (202), une balise de fonctionnalité (204) et une balise personnalisée (206).

6. La plateforme de génération et de gestion d'informations sur les marchandises basée sur le crowdsourcing selon la revendication 5, dans laquelle la balise de catégorie (202) est divisée niveau par niveau, la balise de caractéristique (204) sert à marquer les caractéristiques et/ou les fonctionnalités du produit et/ou du service, et la balise personnalisée (206) est une balise définie par l'utilisateur en plus des balises de catégorie et de caractéristique (204), la balise personnalisée (206) permettant à un utilisateur participatif de créer des balises à partir de sa propre compréhension, de son sentiment et de ses préférences.

7. La plateforme de génération et de gestion d'informations sur les marchandises basée sur le crowdsourcing de la revendication 4, adaptée pour s'abstenir de fixer les sous-éléments d'attributs nécessaires que les informations d'attributs (102) doivent comprendre, dans laquelle les informations d'attributs (102) sont personnalisées par l'utilisateur du crowdsourcing, les informations sur la source d'achat (104) peuvent inclure plusieurs adresses, et l'utilisateur du crowdsourcing peut personnaliser la forme d'expression de l'adresse d'achat ; dans laquelle les informations de rédaction (106) proviennent de l'utilisateur participatif, et l'utilisateur participatif peut soumettre activement les informations de rédaction (106) à la plateforme, la plateforme pouvant également obtenir la rédaction à partir d'autres sources.

8. La plateforme de génération et de gestion d'informations sur les marchandises basée sur le crowdsourcing selon la revendication 4 ou 7, adaptée pour générer les informations d'attribut (102) comme suit :
1) Les informations d'attribut (102) sont personnalisées par l'utilisateur participatif ; la plateforme s'abstient de prédéfinir les sous-éléments que les informations d'attribut (102) doivent inclure ;
2) Le mécanisme d'examen bidirectionnel basé sur le crowdsourcing est utilisé pour examiner les informations sur les attributs (102) fournies par l'utilisateur du crowdsourcing ; dans lequel l'examinateur est l'un quelconque parmi l'utilisateur du crowdsourcing, l'équipe d'exploitation de la plateforme, des algorithmes et/ou mécanismes non manuels, ou une combinaison des trois ; les conditions de décision pour les résultats de l'examen peuvent être fournies par le concepteur de la plateforme ou personnalisées par l'examinateur ; le soumissionnaire des informations sur les marchandises peut examiner et/ou contester les résultats et/ou les avis de l'examen ;
3) Arbitrage de la plateforme : une fois qu'une réclamation est déclenchée, la plateforme intervient dans l'arbitrage ;
4) Modification et nouvelle soumission : si une information d'attribut (102) échoue après le processus d'évaluation, le soumissionnaire peut la modifier en fonction des résultats de l'évaluation et/ou des avis ;
5) Jugement de validité : le jugement de validité d'une information d'attribut (102) est basé sur les résultats de l'examen et/ou les avis obtenus lors de l'examen de la plateforme ;
6) Informations d'attributs modélisées (102) : si les informations d'attributs (102) passent l'examen bidirectionnel basé sur le crowdsourcing, ces informations d'attributs définies par l'utilisateur (102) sont appliquées comme modèle pour ce produit et/ou service sur la plateforme.

9. La plateforme de génération et de gestion d'informations sur les marchandises basée sur le crowdsourcing selon la revendication 1, 4 ou 7, adaptée pour surveiller au moins l'un parmi un GPS, une adresse municipale, une adresse civique et une adresse IP qui doit être incluse dans les informations sur les marchandises fournies par l'utilisateur du crowdsourcing.

10. La plateforme de génération et de gestion d'informations sur les marchandises basée sur le crowdsourcing selon la revendication 1 ou 4, adaptée pour définir des conditions de qualification afin de sélectionner l'évaluateur ; dans laquelle les conditions de qualification comprennent les éléments suivants : pour être qualifié pour évaluer des informations sur les marchandises, l'évaluateur peut être un utilisateur qui a créé des informations sur des produits similaires, un utilisateur local dans la même ville que la source d'achat indiquée, un utilisateur qui a créé les informations sur les marchandises et/ou la rédaction pour ce produit et/ou service, ou un utilisateur qui a ajouté des sources d'achat pour des produits de la même catégorie.

11. La plateforme de génération et de gestion d'informations sur les marchandises basée sur le crowdsourcing selon la revendication 1, 4 ou 10, dans laquelle la plateforme comprend des règles de révision pour les informations rédactionnelles (106) provenant d'un utilisateur du crowdsourcing, dans laquelle les règles de révision comprennent des éléments de notation définis par la plateforme et/ou des avis de révision.

12. La plateforme de génération et de gestion d'informations sur les produits basée sur le crowdsourcing selon la revendication 1, 4 ou 11, adaptée pour sélectionner les informations rédactionnelles (106) utilisées par la plateforme en adoptant un mode de notation périodique, et sélectionner et mettre à jour les textes rédactionnels à afficher en fonction d'une note effective obtenue au cours de chaque période de notation.

13. La plateforme de génération et de gestion d'informations sur les marchandises basée sur le crowdsourcing selon la revendication 1, adaptée pour afficher les informations sur les marchandises en fonction de différents modes d'affichage, notamment en fonction de la région, de l'abonnement de l'utilisateur, des données de l'utilisateur ou de toute combinaison de ceux-ci.

14. La plateforme de génération et de gestion d'informations sur les marchandises basée sur le crowdsourcing selon la revendication 13, adaptée pour filtrer et afficher les informations sur les marchandises en fonction de la région, et pour afficher les attributs d'un produit et/ou d'un service pouvant être acheté dans la zone d'affichage désignée, c'est-à-dire la plateforme est adaptée pour fusionner les informations d'attributs récurrents (102) et afficher toutes les informations d'attributs disponibles dans la zone d'affichage désignée ; dans laquelle la sélection des informations de rédaction (106) à afficher est uniquement liée au produit et/ou au service et ne doit pas nécessairement provenir de la zone d'affichage désignée.

15. La plateforme de génération et de gestion d'informations sur les marchandises basée sur le crowdsourcing selon la revendication 14, adaptée pour permettre à un utilisateur d'acheter et de promouvoir les produits et/ou services affichés sur la plateforme en fonction des informations sur les marchandises et d'effectuer en outre des opérations de suivi, notamment : passer une commande, commander, confier ou déléguer l'achat, recommander, partager et transférer.

16. La plateforme de génération et de gestion d'informations sur les marchandises basée sur le crowdsourcing selon la revendication 1, adaptée pour récompenser un utilisateur avec des éléments comprenant : la soumission d'informations sur les produits, l'exécution d'une tâche sur la plateforme, la génération d'un volume de transactions à partir des informations fournies sur les marchandises et l'apport d'abonnements en tant que fournisseur d'informations sur les marchandises ; et l'utilisation de formes de récompense comprenant des points, des bonus, des autorisations sur la plateforme et des commissions sur les transactions effectuées sur la plateforme.
